# EUROPEAN PATENT APPLICATION

(11) **EP 3 560 699 A1**
(43) Date of publication of application: **30.10.2019**
(21) Application number: 18169761.6
(22) Date of filing: 27.04.2018
(51) Int. Cl.: B32B 7/04, B32B 15/08, B32B 15/085, B32B 15/088, B32B 15/09, B32B 15/20, B32B 27/10, B32B 27/32, B32B 27/34, B32B 27/36, B32B 3/26, B65D 81/34, B65D 81/38

(54) **INSULATING MULTIPLE-WALL WRAPPER**

(71) Applicant: Amcor Flexibles Burgdorf GmbH, 3401 Burgdorf (CH)
(72) Inventor: ROTHENBUHLER, Martin, 3550 LANGNAU I.E. (CH)
(74) Representative: Pronovem

(57) **Abstract**

The present invention is related to a flexible multi-wall, mono or multilayer laminate for the production of insulating one-way packaging, the laminate comprising at least two superposed walls partially sealed to each other on at least one sealing zone positioned substantially at least on one edge of the laminate, the at least two walls being separated by a substantially continuous air layer.

## Description

### Field of the invention

The present invention discloses a flexible multilayer and multi-wall packaging laminate for the production of a multiple-wall wrapper, in particular a flow wrapper or a stand-up pouch, as disposable packaging for the thermal insulation of frozen or heated items.

### State of the art

Reusable insulated transportation container for conveying frozen and heated goods are well known in the art.

EP 0 085 534 A1 discloses an insulating bag for frozen goods, the bag having a plurality of layers, in particular a reflecting layer which forms an air cushion with a plurality of air compartments to reduce thermal exchange to a minimum.

DE 2641484 discloses a flexible heat-insulating bag for carrying foodstuffs comprising an outer reflecting layer and an insulating layer of foamed polyethylene.

US 4,211,267 discloses a thermal-insulating carrying bag based on thermoplastic polyethylene foam enclosed between two polyethylene films.

Due to their price segment, the above-mentioned prior-art bags are convenient for the bulk transport of frozen items or for reusable packaging's but are commercially not sustainable for disposable one-way packaging, in particular that of one-portion packs.

### Aims of the invention

The present invention aims to provide a flexible multilayer and multi-wall packaging laminate for the production of a one-way multiple-wall wrapper for frozen and heated items, preferably a flow pack or a stand-up pouch comprising at least two flexible multilayer films with at least one longitudinal seal and one cross seal, the at least two flexible films being only partially laminated to each other in specific seal areas, and being separated by a non-compartmented thin air layer over the main part of their surfaces.

### Summary of the invention

The present invention discloses a flexible multi-wall laminate for the production of insulating one-way packaging, the laminate comprising at least two superposed walls, the at least two superposed walls (2,3) being partially sealed to each other on at least one seal zone 5, said seal zone being substantially positioned at least on one edge of the laminate, both walls being separated by an air layer 9 outside the seal zones.

Preferred embodiments of the present invention disclose at least one, or an appropriate combination, of the following features:
- each individual wall (2,3) is a flexible film selected from the group consisting of a monolayer film, a coextruded multilayer film and/or a multilayer laminate;
- the at least one seal zone 5 represents less than 30 %, preferably less than 20 % or even 15 % of the total surface of the laminate;
- the laminate comprises a printed wall, said wall comprising one or more perforations;
- the air layer 9 is a substantially continuous air layer, the average thickness of said air layer being comprised between 0.1 and 1 mm, preferably 0.1 and 0.5 mm;
- the laminate consists of two walls and one continuous air layer or three walls and two continuous air layers outside the sealing zones 5;
- the at least two superposed walls (2,3) are separated by a compartment-free air layer;
- at least one of the at least two superposed walls (2,3) comprises a metallic film, a metallized polymer film or a multilayer polymeric film comprising paper or aluminium.

The present invention further discloses an insulating multiple-wall packaging 1 for frozen and heated items comprising the flexible multi-wall laminate according to the invention with at least one longitudinal seal 7 and at least one cross seal 8, wherein the sealing zones 5 of the laminate substantially corresponds to longitudinal seals 7 or cross seals 8 of said packaging.

Preferred embodiments of the present invention disclose at least one, or an appropriate combination, of the following features:
- the packaging is a flow wrapper or a stand-up pouch;
- the faces (11,13) of the multiple wall packaging oriented to the environment are metallic layers;
- the wall 2 oriented, in use, to a packed frozen good 4 is a flexible film comprising as inner face 10 in contact with the good 4 a seal layer selected from the group consisting of polypropylene, preferably oriented and/or cavitated polypropylene, preferably in the range of 10 to 50 µm, more preferably in the range of 20 to 35 µm; polyethylene, preferably oriented polyethylene; the layer in contact with the seal layer being selected from the group consisting of oriented polypropylene, oriented polyethylenetherephtalate or oriented polyamide;
- the wall 3 is a flexible monolayer film selected from the group consisting of polypropylene, preferably oriented and/or cavitated propylene in the range of 10 to 50 µm, preferably in the range of 20 to 35 µm, polyethylenetherephtalate in the range of 6 to 36 µm, preferably in the range of 8 to 19 µm and polyethylene, preferably oriented, in the range of 10 to 90 µm, more preferably in the range of 15 to 30 µm;
- the wall 3 is a multilayer film selected from the group consisting of polyethylenetherephtalate and polyethylene, polypropylene and polyethylene, polyamide and polyethylene, paper and polyethylene, polyethylenetherephtalate and polypropylene, polypropylene and polypropylene, polyamide and polypropylene or paper and polypropylene;
- the wall 2 oriented, in use, to a packed good 4 to be heated is a flexible multilayer film comprising from the inner face 10 in contact with the good 4 to the outer face 11, the layer sequence: polypropylene or polyethylene, optionally an aluminium foil, oriented polyethylenetherephtalate and/or oriented polyamide;
- the polyethylene or the polypropylene layer has a thickness of 20 to 120 µm, preferably 40 to 70 µm, the optional aluminium foil has a thickness of 3 to 20µm, preferably 6 to 12 µm, the oriented polyethylenetherephtalate and/or oriented polyamide has a thickness of 5 to 30 µm, preferably 10 to 20µm;
- the pack comprises an additional external layer of oriented polyethylenetherephtalate or oriented polyamide as wall 3;
- the packaging according to the invention is a disposable one-way packaging.

### Description of the figures

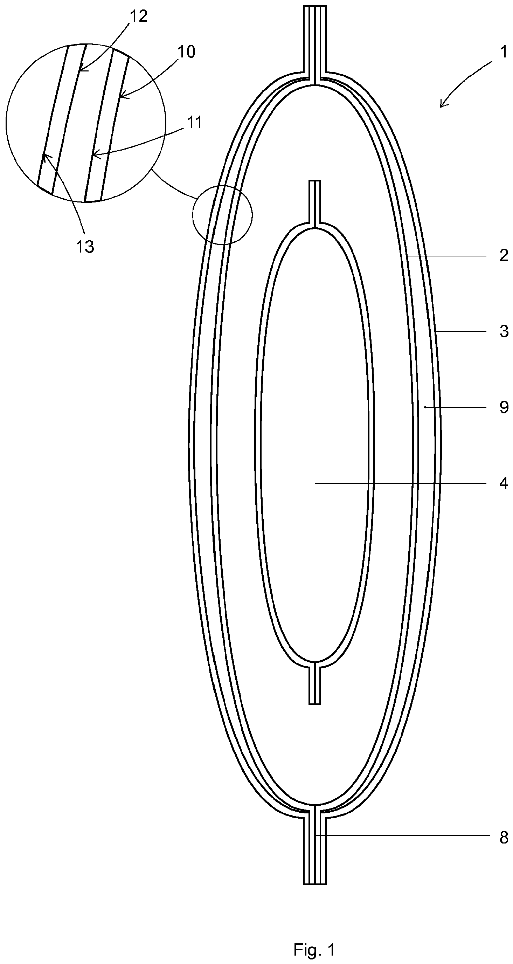

Figure 1 represents a sectional view of a double-wall packaging according to the present invention with an ice pack inside, simulating for instance an ice-cream stick.

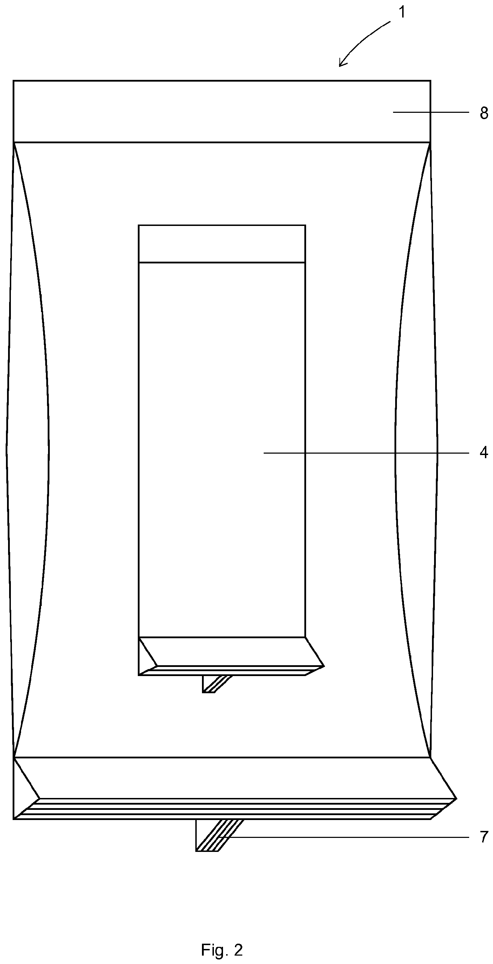

Figure 2 represents a front view of a double-wall packaging according to the present invention with an ice pack inside, simulating an ice-cream stick.

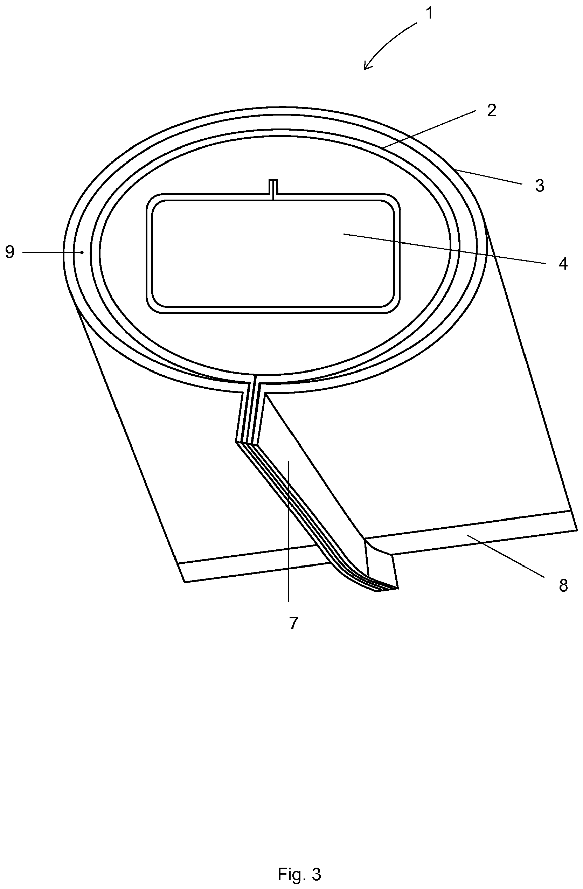

Figure 3 represents another sectional view of a double-wall packaging according to the present invention in 3D representation with an ice pack inside, simulating for instance an ice-cream stick.

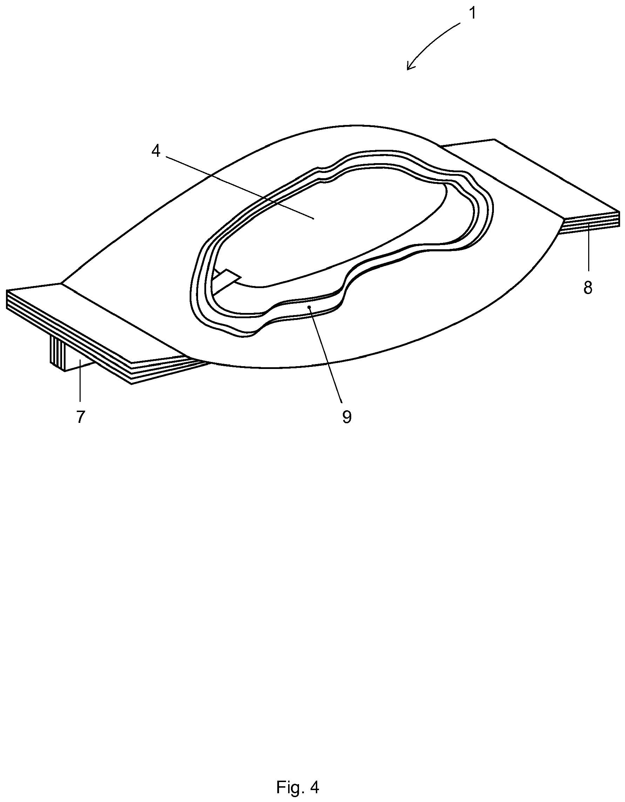

Figure 4 represents a 3D view of a double-wall packaging according to the present invention with a descriptive window, illustrating how a double-wall pack for an ice-cream stick would appear.
Figure 5 represents a partially-laminated film to realise a double-wall flow wrapper with the laminate according to the present invention.

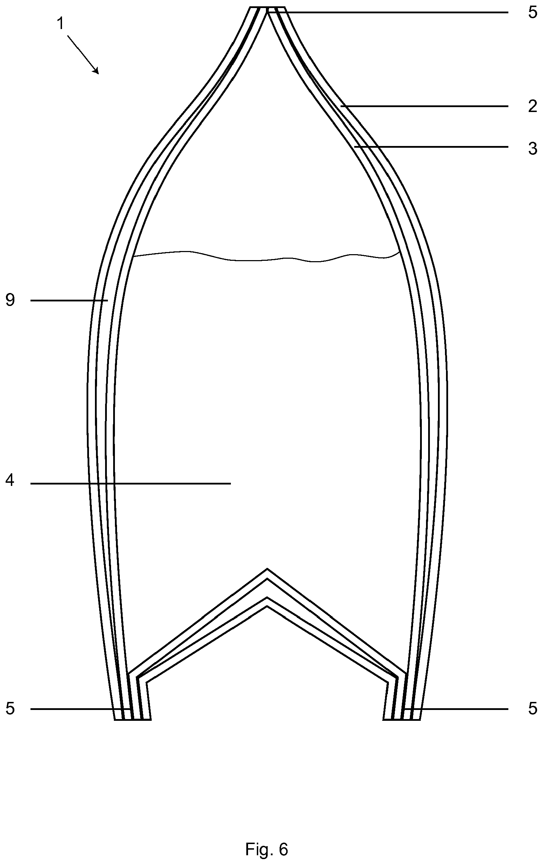

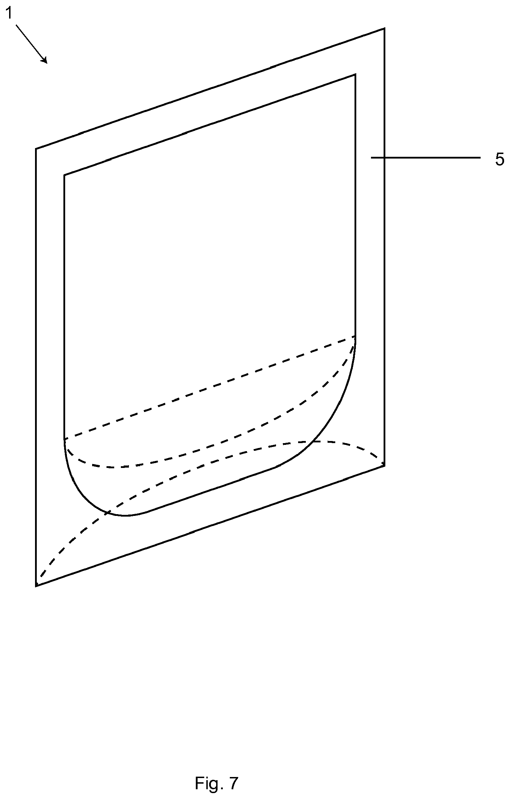

Figure 6 and 7 represent a stand-up pouch (SUP) according to the present invention, in particular for heat food applications.

### Keys

- 1:: multi-wall packaging
- 2:: first flexible film
- 3:: second flexible film
- 4:: packed good
- 5:: seal zones
- 6:: unsealed zones
- 7:: longitudinal seal
- 8:: cross seal
- 9:: air layer
- 10:: inner face of the multi-wall packaging in contact with the packed good
- 11:: outer face of the first flexible film
- 12:: inner face of the second flexible film
- 13:: outer face of the second flexible film

### Detailed description of the invention

The present invention aims to disclose a flexible multi-layer and multi-wall laminate for the production of disposable one-way cold and warm-keeping packaging for instant use, for packing food items such as ice bars or food to be heated. Several double-wall and triple-wall wrappers have been tested that are made of multilayer films of various kinds only partially laminated, preferably in the seal areas, and comprising a substantially continuous air layer between the walls.

The target of the present invention was to realize an insulating multi-layer and multi-wall laminate for use in a packaging while maintaining substantially the same volume as a single-wall multi-layer pack, avoiding any additional transport costs due to higher single-pack volumes. For this reason, the average air layer between each single wall is lower than 3 mm, preferably lower than 2 mm or even 1 mm. All average values below 1mm, for instance 0.8mm, 0.6mm, 0.4mm... are possible.

A series of tests were performed to examine the principle of using double and triple-wall partially-laminated flexible packaging to keep the temperature and the properties of the cold or frozen packed goods as well as for heated goods over a longer period of time.

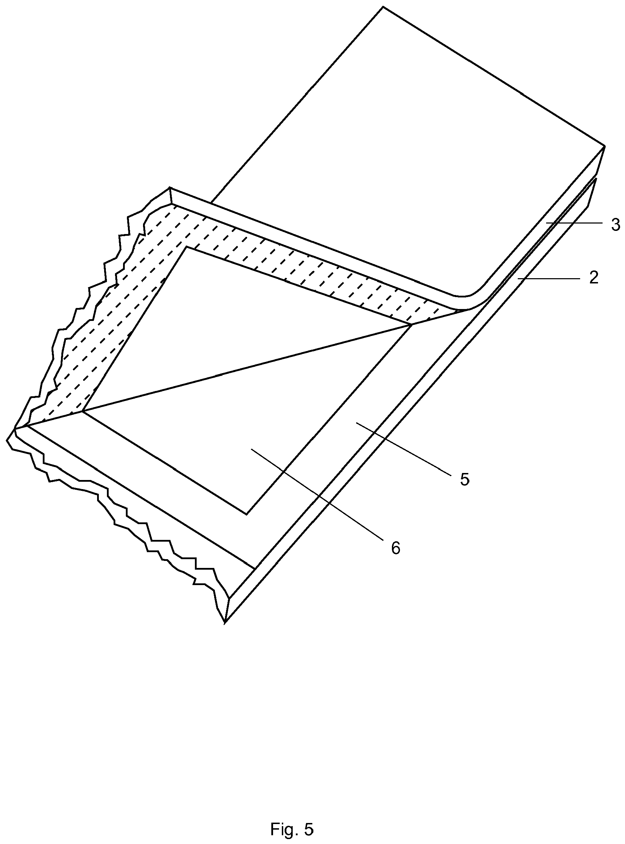

The expression "partially laminated" means that the lamination of two or more multilayer laminates is only performed on the edge of the mono or multilayer flexible film, in general in the seal areas, where it is difficult or impossible to keep an air layer between the walls on the final insulating pack such as a flowpack or a stand-up pouch due to cross or longitudinal seals (See Fig.5).

Although most of the illustrative examples and figures address insulation packs for frozen items, the same principle is of cause valid for heated items remaining in their original packaging after heating.

Many consumers buy frozen food and either consume it within a short time or transport it to their home freeze equipment. An ice-cream stick wrapped with a flexible film is commonly consumed. If the ice is especially without chocolate coating or is of a "sorbet" type of ice cream, the fact that the product starts to melt and/or re-freezes prior to its consumption is a problem that could be addressed by a higher barrier against energy transfer into the packaging from the direct environment around the flexible wrapper.

Within the period of time starting from the ice-cream manufacture until the consumer buys the product, the quality of the product is supported by the stabilisation of the temperature over the entire supply chain. Furthermore, ice cream has a natural tendency to exude and crystallise water, and the size of the frozen-water particles increase until they reach an inconvenient size for the consumer. This effect is not desirable.

The multiple-wall wrapper obtained from the insulating multiple-wall laminate with air layer of the present invention can be created in various manners.

It is desired that a maximal surface of the double-wall wrapper has an air layer between the two or three walls; however, as mentioned above, partial lamination is necessary in the potential seal zones where the wrappers are usually sealed. The remaining part of the areas may remain without contact between the inner and the outer wall layers. A small continuous air space between two superposed walls is preferred to avoid a "cushion effect" created by potential compartments dividing the surface of the pack and increasing its global volume prior to conversion into a wrapper. Other seal areas outside of those strictly necessary to achieve the packaging should be avoided in order to avoid thermal bridges between two or more walls. The packaging according to the present invention is preferably compartment-free.

Partial adhesive lamination is technically achievable by registering the adhesive geometry with the print that will also be used during conversion of the flexible film materials into final packs. This brings the benefit of having ready materials and conversion possibilities on the existing process equipment of the content manufacturers.

The average air layer between the two or three walls of flexible films (double wall or triple wall) can be as low as 0.01 mm, but in practice not lower than 0.1 mm, preferably 0.2 mm or 0.3 mm, a thicker air layer could nevertheless also be achieved, in particular by applying small perforations only at the outer wall of the insulating pack in order to manage an air intake between the two walls when a wrapper is formed.

The pack according to the invention can also be performed by the use of sealing varnish or sealable films. The different mono or multilayer films are unwound from at least two reels, associated into the same conversion path within the packaging machine and sealed in a double or triple wall version at the packaging machine itself.

Only average values of the air layer thickness between the two walls can be measured. The method for the evaluation of the average air layer thickness is disclosed in the present description.

### Lab test procedure for frozen items

Various flexible films have been selected to exemplify the improved performance of a double or triple-wall structure compared to a single-wall based wrapper. Materials used for the tests were usual materials for flexible laminates of various kinds. Preferred materials were oriented polypropylene (OPP) white cavitated, oriented polypropylene (OPP) white pigmented or transparent, or even metallised oriented polypropylene (M-OPP).

Bi-axially or mono-axially oriented polypropylene films are the standard films being used today, but the present invention is of cause not limited to oriented polypropylene films. Others usual films such as oriented or cast polyethylene terephthalate (PET), oriented polyamide (OPA), oriented PE, polyethylene fuaronat, paper, aluminium foil, etc. are available for the reduction to practice of the present invention.

The testing's were performed in the following order:
A) To create a double-wall structure, the inner wall of a multi-layer laminate was partially coated with an EVA-based sealing dispersion for subsequently sealing the inner to the outer layers in the sealing position of the final wrapper. To vary the average distance (layer) between the inner and outer layers, the outer layer was pushed slightly back to generate a higher distance from one sealing line to the other sealing line and take up air in between the two walls.
B) A stick pack with a length of about 155 mm and a circumference of about 76 mm was filled with about 40 g of tap water. At one end, the stick pack was connected on the right and left positions of the sealing rim with a nylon filament in order to position the water stick pack in the centre of the test wrapper to be evaluated and produced according to step A.
C) The so-enclosed air in the partial laminated double-wall test structure was then measured by dipping the complete prepared double-wall structure into a volumetric cylinder (Archimedes principle) in order to measure the final volume. The volume of wrapping material (film as such) was not considered, as it was a constant value. This air amount was then recalculated into an average distance inside the four sealing edges.

The following calculation was used:
Wrapper size cut at 185 mm width and 195 mm length.
The sealing width around the total size was reduced by 6 mm from each side (195 mm - 12 mm= 183 mm width and 185 mm - 12 mm = 173 mm length for the continuous area free of lamination).
The area which has to be considered for air placement is 183 mm x 173 mm = 31659 mm². The average distance between inner and outer layers was then calculated (average air layer thickness between the two walls) = measured air volume with the Archimedes effect in water x 1000 (factor from ml into mm³)/ area free of lamination (here 31659 mm²].
As an example: 4 [ml] x 1000 [mm³/ml]/ 31659 [mm²] = 0.14 mm average distance.
D) The prepared stick packs were placed in a central position of the double-wall wrappers and closely sealed. At the positions where the nylon filament was going through the sealing zone of the wrapper, small tapes were used to additionally maintain the central position.
E) The prepared samples where then taken into a freezing chamber and were cooled down to -12°C for more than 2 days to ensure a constant temperature in the samples.
F) The measuring room was closed to avoid any air streams. Furthermore, there was no light in the room during the 40 minutes of "warming-up time" of the samples at 24 °C room temperature.
G) The samples were then opened and the water was wasted so that the residual ice amount could be weighted for the calculation of the molten ice amount.
H) The energy intake of ice /melted water was then calculated in the following way: T° was taken 12 Kelvin's as the frozen temperature was -12°C and the melted water/ice mix stays at 0° until all ice is molten: weight of filled water [g] x heat capacity of ice [2.06 j/g x 12 K] + weight of melted water x melting heat [335 j/g] gives the energy intake results represented in Table 1.

Metallized films and aluminum-foil based structures were also tested and the metallization/foil layer was placed against the outer environment as the infra-red irradiation from outside could be partially reflected. The double and single-wall packs containing the stick pack were frozen again at -12° for 2 days before the different temperature increases and energy intakes were evaluated once the packs were exposed to room temperature (24 °C) in a free-hanging status (no physical contact with solid or liquid materials in the room). The details of the testing embodiments are shown in the tables below, which presents the different energy-intake levels of different structures.

Table 1 shows the comparison of various structures of flexible packaging when using partial lamination with air layer (2 walls) or when all layers are laminated with 100% area coverage (1 wall). The energy intake is clearly lower in a double-wall structure using partial lamination.

The graph below shows the effect of a double-wall structure of the same material having various average distances (air layers) between the outer and inner walls. The total volume within the complete wrapper stays around the same volume (ml), but not the distribution of air volume directly around the simulated ice-cream material and the air volume positioned in the area of partial lamination.

The basic reference points at 0 mm distance were fully laminated models of the above-mentioned testing structures. A distance of less than 0.01 mm, in practice 0.05 mm, preferably 0.1 mm can be considered as the "minimum distance" that can be generated by two superposed walls in the lab, it was not possible to further reduce the distance.

The graph below clearly shows a measurable benefit of lower energy intake when using partial lamination on minimum two walls of flexible mono or multi-layer film.

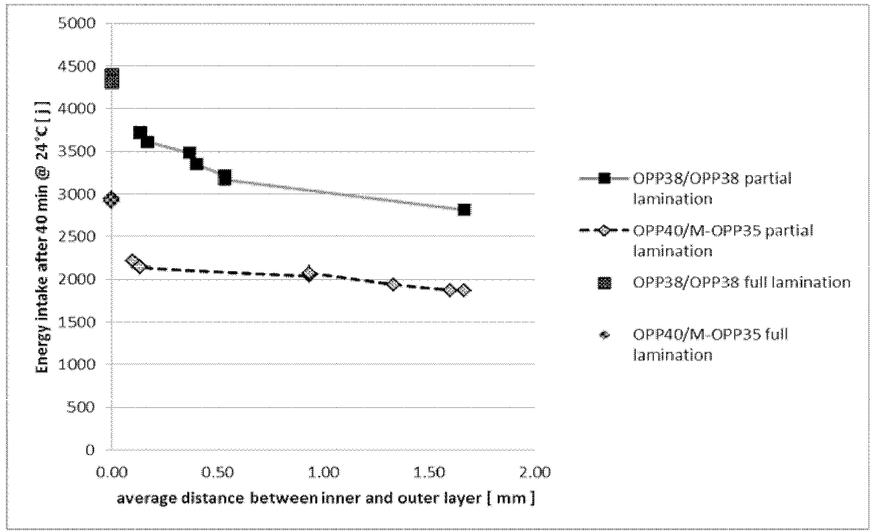

In Table 2, an additional series of tests were performed, starting from 40 g frozen stick packs wherein the heat intake was measured after 40 minutes at room temperature. Examples 7 to 11 compare single wall (no air layer), double wall (one air layer) and triple wall (2 air layers) packs, respectively based on 2 and 3-layer laminates of a standard oriented polypropylene of 38 µm (cavitated and not metallized).
The results of this test show that Example 7, with 3 OPP layers and no air layer performs better than a fully laminated two-layer laminate of OPP.
As soon as one air layer is introduced by a partial lamination (Example 8 and 11), the insulation performance is increased and even more increased on a 3-layer OPP laminate than on a 2-layer laminate of OPP.
The best insulation performance is obtained with 2 air layers on Example 9 with one average air layer of 0.13 mm between each OPP layers.

**Table 1**

| Ex. N° | Structure details of the laminate: from outside to inside of the outer wrapper | Walls | Layer | Melt water 30min. (1*) | **Melt water 40min. (2*)** | Melt water 50min. (3*) | Energy intake 30min. (4*) | Energy intake 40min. (5*) | Energy intake 50min. (6*) | Average 30+40+ 50min. | % of stick pack without flowpack energy intake |
|---|---|---|---|---|---|---|---|---|---|---|---|
| 1 | OPP 33µm cavitated | 1 | 1 | 5,4 | **5,9** | 7,1 | 3035 | 3203 | 3605 | 3281 | **42** |
| 2 | OPP 40µm pigm. / M-OPP35µm cav. | 1 | 1 | 3,3 | **5,3** | 8,2 | 2332 | 3002 | 3973 | 3102 | **40** |
| 3 | M-OPP35 µ cav. / M-OPP35 cav. | 2 | 2 | 2,8 | **3** | 3,7 | 2164 | 2231 | 2466 | 2287 | **30** |
| 4 | OPP20µm / Alu 8µm / OPP20µm | 2 | 3 | 3 | **3,6** | 4,8 | 2231 | 2432 | 2834 | 2499 | **32** |
| 5 | OPP40µm pigm. / M-OPP35µm cav. | 2 | 2 | 2,7 | **2,8** | 4,4 | 2131 | 2164 | 2700 | 2332 | **30** |
| 6 | Stick pack without flow wrapper | - | - | 17,4 | **18,3** | 22,5 | 7055 | 7357 | 8764 | 7725 | **100** |

| | | | | | | | | | | | |
|---|---|---|---|---|---|---|---|---|---|---|---|
| heat capacity ice 2.06 j/g*K and melting heat 335 j/g (1*) Amount of melted ice after 30min. (at 0 min. 40 g of ice @-12 °C) (2*) Amount of melted ice after 40min. (at 0 min. 40 g of ice @-12 °C) (3*) Amount of melted ice after 50min. (at 0 min. 40 g of ice @-12 °C) (4*) Energy intake into frozen water in 30min. [j] (5*) Energy intake into frozen water in 40min. [j] (6*) Energy intake into frozen water in 50min. [j] OPP = oriented polypropylene; M-OPP = metallized oriented polypropylene; Alu = aluminum layer; cav.= cavitated; pigm.= pigmented | | | | | | | | | | | |

**Table 2**

| **Ex.** | **Laminate and wrapper description** | **Walls** | **Layers** | **Average air layer (mm)** | **Heat loss (Joule)** |
|---|---|---|---|---|---|
| 7 | OPP38µm/OPP38µm/OPP 38µm; 100% lamination of each layer | 1 | 3 | 0 | 2968 |
| 8 | OPP38µm/OPP38µm/OPP 38µm; 12% lamination surface on double layer OPP/OPP | 2 | 3 | 0.13 | 2576 |
| 9 | OPP38µm/OPP38µm/OPP 38µm ; 12% lamination surface on each layer | 3 | 3 | 0.13/0.13 | 2483 |
| 10 | OPP38µm/OPP38µm ; 100% lamination of each layer | 1 | 2 | 0 | 3169 |
| 11 | OPP38µm/OPP38µm ; 12% lamination surface on each layer | 2 | 2 | 0.13 | 2648 |

### Heat insulation packs

A beneficial effect on warm items and its enlarged time for keeping the temperature with the packs of the present invention are for example:
- classical pasteurisation processes where the target is to reduce the number of bacteria in the food by heating. As the effect of pasteurisation is a sum of the lethal thermal temperature over the whole pasteurisation time, it can be assumed that when a pack is heated up and stays longer under warm conditions, the effect of pasteurisation is enhanced using a partial laminated film with air layer(s) compared to a full laminated structure with no air layer.
- the pack produced via a laminate according to the invention is also beneficial if the consumer reheats the food in such a pack immediately before consumption, the temperature decrease into the food would be slower and therefore the time for a warm meal consumption is longer. Typical applications are stand-up pouches for heating up in water bath or microwave heating or when a package would be placed into the oven, i.e. garlic bread etc.

### Lab test procedure for heated items

Various films and structures have been selected to exemplify the better performance of a partial lamination (multi-wall, at least one air layer) compared to a full lamination (single wall, no air layer) in multi-layer structure. Bi-axially or mono-axially oriented polyester films are one of the standard films being used today, but the present invention is of cause not limited to oriented polyester films. Others usual films such as oriented or cast polyethylene terephthalate (PET), oriented polyamide (OPA), oriented PE, polyethylene fuaronat, paper, aluminium foil, etc. are available for embodiments of the present invention.
The testing's were performed in the following order:
Test sample: PET19µm/air/PET12µm/PET12µm/OPA12µm/PP70µm; partial lamination arranged between PET19µm and PET12µm and the laminate finally shaped as a stand-up pouch.

### Test procedure

1. partial laminate in different % of the front and back areas of a premade stand-up pouch using a polyester (PET) with a thickness of 19 µm;
2. fill in water and weight the amount (one series performed with about 256g and a second series with 395g) of water filled into pouch;
3. then, 90% of the top width was sealed in order to release overpressure from steam;
4. heat up the water in the pouches with a microwave with 700 Watts power level over 2 minutes and measure the heat in the water when stirred with a thermometer - starting t° was between 81 and 85 °C;
5. Measure the temperature again on each sample after 60 min. storage time at room condition (24°C);
6. Calculate the Energy loss from the storage time.
calculation example: (ΔT)*4.18(j/g/K)*[weight of the water (g)]/(1000j/kj)= kj on energy loss
The following results were found when using different % of area lamination:

**Table 3**

| | | **Water amount in prepared pouch** | **ΔT after 60 min @ 24°C (ΔT)** | **Energy loss from t(0min) until t(60min)** |
|---|---|---|---|---|
| **Ex.** | % of area lamination on PET19µm towards PET12µm | [g] | [°C] | [kj] |
| 12 | 100 | 255.5 | 34,5 | 36.8 |
| 13 | 30 | 256.5 | 30.5 | 32.75 |
| 14 | 10 | 256.5 | 29 | 31.1 |
| 15 | 100 | 395 | 31 | 51.2 |
| 16 | 30 | 395 | 29 | 47.9 |
| 17 | 10 | 395 | 27 | 44.6 |

In Table 3, a specific stand-up pouch (SUP) comprising a laminate of polyethylene terephthalate (PET), oriented polyamide (OPA) and polypropylene (PP) of various thicknesses was tested: PET19µm/air/PET12µm/PET12µm/OPA12µm/PP70µm with various percentages of a double-wall laminate with no air layer (100% laminate), an air layer covering 70 % of the surface (30 % area lamination) and an air layer covering 90 % of the surface (10 % area partial lamination only on the sealing area of the stand-up pouch).

The heat loss was the highest on Examples 12 and 15 (without any partial lamination and no air layer). The lowest heat loss was observed on Examples 14 and 17 where the double wall pack had a surface covering of 90 %, and only the sealing areas of the stand-up pouch were free of air layer.

A preferred configuration is exemplified in the following sequence. The pack to be heated is a multilayer comprising from the inner face 10 to the outer face 11 cast or blown polypropylene, blown polyethylene as heat-seal film in the ranges of 20 to 120 µm, preferably in the range of 40 to 70 µm, optionally aluminium foil for barrier properties in the range of 3-20 µm, preferably in the range of 12-6 µm, oriented polyethylene terephthalate or oriented polyamide for mechanical stability in the range of 5 to 30 microns, preferably in the range of 10 to 20µm for wall 2. The thermal insulating air layer 9 could be achieved with and additional external layer using oriented Polyethylenetherephtalate or oriented polyamide.

A specific advantage of the packaging according to the present invention is the obtained insulation effect without a substantial increase of the global volume of the pack. This amount of insulation effect could not be expected from double or triple wall packaging with average air layers of less than 1 mm, and preferably less than 0.5 mm.

## Claims

1. Flexible multi-wall laminate for the production of insulating one-way packaging, the laminate comprising at least two superposed walls (2,3), the at least two superposed walls (2,3) being partially sealed to each other on at least one seal zone (5), said seal zone (5) being substantially positioned at least on one edge of the laminate, both walls (2,3) being separated by an air layer (9) outside the seal zones.

2. Flexible multi-wall laminate according to Claim 1, wherein each individual wall (2,3) is a flexible film selected from the group consisting of a monolayer film, a coextruded multilayer film and/or a multilayer laminate.

3. Flexible multi-wall laminate according to Claim 1 or 2, wherein the at least one seal zone (5) represents less than 30 %, preferably less than 20 % or even 15 % of the total surface of the laminate.

4. Flexible multi-wall laminate according to any of the preceding claims, wherein the laminate comprises a printed wall, said wall comprising one or a plurality of perforations.

5. Flexible multi-wall laminate according to any of the preceding claims, wherein the air layer (9) is a substantially continuous air layer, the average thickness of said air layer being comprised between 0.1 and 1 mm, preferably 0.1 and 0.5 mm.

6. Flexible multi-wall laminate according to any of the preceding claims, wherein the laminate consists of two walls and one continuous air layer (9) or three walls and two continuous air layers (9) outside of the sealing zones (5).

7. Flexible multi-wall laminate according to any of the preceding claims, wherein the at least two superposed walls (2,3) are separated by a compartmented-free air layer (9).

8. Flexible multi-wall laminate according to any of the preceding claims, wherein at least one of the at least two superposed walls (2,3) comprises a metallic film, a metallized polymer film or a multilayer polymeric film comprising paper or aluminium.

9. Insulating multiple-wall packaging (1) for frozen and heated items comprising the flexible multi-wall laminate of Claims 1 to 8 with at least one longitudinal seal (7) and at least one cross seal (8), wherein the sealing zones (5) of the laminate substantially corresponds to longitudinal seals (7) or cross seals (8) of said packaging.

10. Insulating multiple-wall packaging (1) according to Claim 9, wherein said packaging is a flow wrapper or a stand-up pouch.

11. Insulating multiple-wall packaging (1) according to any of Claims 9 or 10, wherein the faces (11, 13) of the multiple wall packaging oriented to the environment are metallic layers.

12. Insulating multiple-wall packaging (1) according to any of Claims 9 to 11, wherein the wall (2) oriented, in use, to a packed frozen good (4) is a flexible film comprising as inner face (10) in contact with the good (4), a seal layer selected from the group consisting of:
- polypropylene, preferably oriented and/or cavitated polypropylene, preferably in the range of 10 to 50 µm, more preferably in the range of 20 to 35 µm,
- polyethylene, preferably oriented polyethylene;
the layer in contact with the seal layer being selected from the group consisting of:
- oriented polypropylene;
- oriented polyethylene terephthalate;
- oriented polyamide.

13. Insulating multiple-wall packaging (1) according to any of Claims 9 to 12, wherein the wall (3) is a flexible monolayer film selected from the group consisting of:
- polypropylene, preferably oriented and/or cavitated propylene in the range of 10 to 50 µm, preferably in the range of 20 to 35 µm,
- polyethylenetherephtalate in the range of 6 to 36 µm, preferably in the range of 8 to 19 µm),
- polyethylene, preferably oriented, in the range of 10 to 90 µm, more preferably in the range of 15 to 30 µm;
or a multilayer film selected from the group consisting of:
- polyethylenetherephtalate and polyethylene,
- polypropylene and polyethylene,
- polyamide and polyethylene,
- paper and polyethylene,
- polyethylenetherephtalate and polypropylene,
- polypropylene and polypropylene,
- polyamide and polypropylene,
- paper and polypropylene.

14. Insulating multiple-wall packaging (1) according to any of Claims 9 to 13, wherein the wall (2) oriented, in use, to a packed good (4) to be heated is a flexible multilayer film comprising from the inner face (10) in contact with the good (4) to the outer face (11), the layer sequence:
- polypropylene or polyethylene,
- optionally an aluminium foil,
- oriented polyethylenetherephtalate and/or oriented polyamide.

15. Insulating multiple-wall packaging (1) according to Claim 14, wherein the polyethylene or the polypropylene layer has a thickness of 20 to 120 µm, preferably 40 to 70 µm, the optional aluminium foil has a thickness of 3 to 20µm, preferably 6 to 12 µm, the oriented polyethylentherephatale and/or oriented polyamide has a thickness of 5 to 30 µm, preferably 10 to 20µm.

16. Insulating multiple-wall packaging (1) according to Claims 9 to 15, wherein the pack comprises an additional external layer of oriented polyethylenetherephtalate or oriented polyamide as wall (3).

17. Insulating multiple-wall packaging (1) according to Claims 9 to 16, wherein said packaging is a disposable one-way packaging.
